# EUROPEAN PATENT SPECIFICATION

(11) **EP 0 608 034 B1**
(45) Date of publication and mention of the grant of the patent: **03.04.1996**
(21) Application number: 94200120.7
(22) Date of filing: 19.01.1994
(51) Int. Cl.: B60H 3/06, B01D 46/10, B01D 46/52

(54) **Filter device**
Filtervorrichtung
Dispositif de filtration

(30) Priority: 19.01.1993 NL 9300096
(43) Date of publication of application: 27.07.1994
(73) Proprietor: CARBON HEALTHFILTER V.o.f., NL-6681 KC Bemmel (NL)
(72) Inventor: Merkus, Petrus Theodorus Henricus Maria, NL-6663 KW Lent (NL); Leenders, Paulus Hendrikus Maria, NL-6511 AN Nijmegen (NL); Van IJzendoorn, Paulus Gerardus, NL-6601 BR Wijchen (NL)
(74) Representative: Bartelds, Erik

(56) References cited:
- EP-A- 0 380 026
- EP-A- 0 410 113
- US-A- 4 768 423
- US-A- 5 004 487
- PATENT ABSTRACTS OF JAPAN vol. 12, no. 275 (C-516)(3122) 29 July 1988 & JP-A-63 054 911 (HITACHI LTD) 9 March 1988
- PATENT ABSTRACTS OF JAPAN vol. 12, no. 222 (M-712)(3069) 24 June 1988 & JP-A-63 020 214 (NISSAN MOTOR CO LTD) 27 January 1988

## Description

The present invention relates to a filter device, in particular for a motor vehicle, provided with a base part comprising means adapted for fixing to the vehicle and defining at least one receiving space, and with at least one exchangeable filter part arranged in the receiving space, the filter part being form-retaining and the receiving space being accessible from the inflow side of the base part. Such a filter device is described in EP-A-0 649 335, which is comprised in the state of the art under Art. 54(3) EPC.

Motor vehicles are generally provided with a heating and ventilation system which draws in ambient air and, optionally after having heated this air, causes it to flow out into the interior of the motor vehicle. The air thus carried into the interior of the motor vehicle is therefore a reflection of the ambient air. However, this ambient air contains a large number of substances which may be unpleasant or unhealthy for the occupants of the motor vehicle. This may include natural substances such as pollen, but also substances occurring in the exhaust gases of other motor vehicles such as soot particles, lead, nitrogen compounds and hydrocarbons such as benzene, toluene and xylene. Because the heating and ventilation system of the motor vehicle functions as it were as "vacuum cleaner" the concentration of these substances in the interior of the motor vehicle will be higher than that present in the environment, and often dangerously higher than the concentrations acceptable from the public health viewpoint.

Only a few manufacturers of motor vehicles provide their products factory-fitted with a so-called "microfilter" with which the particulate substances can be removed from the incoming air. These filters generally have the form of a simple vehicle make and type related filter fixed in a suction opening of the heating and ventilation system. This solution has the drawback that the filter often has little effect while replacement of the filter by the user is not easily possible as a result of the make and type related character thereof. The user will hereby be forced to obtain the filter from or via a dealer affiliated to a vehicle manufacturer at a comparatively high price. Moreover, a vehicle manufacturer will generally supply only one type of filter which will not be optimally suited to all applications. Finally, the known make and type related filters are often very difficult to place. The above stated drawbacks also involve the danger of replacement not being carried out, whereby the filter can become clogged and lose its effect, while the performance of the heating and ventilation system will moreover deteriorate greatly.

The earlier filter device described in EP-A-0 649 335 comprises a filter element having a filter medium arranged in zig-zag shaped pleats. On its longitudinal sides extending in the pleating direction, the filter medium is provided with stabilizing strips bonded thereto for stabilizing the zig-zag shaped pleated configuration of the filter medium. During use of the filter device, the filter element is arranged within a filter element holding frame, which in turn is inserted in a holding means, e.g. in the air inlet shaft of an air conditioning system. This filter element is easier to handle and can be inserted into the filter element holding frame in a more simple manner than the known make and type related filter. The filter can hereby be replaced simply (by the user if need be) when it is filled up and the performance of the heating and ventilation system deteriorates. It is the form-retaining character of the filter part which enables simple fixing.

In addition the space located in front of the suction opening of the ventilation system in flow direction will generally be free of obstacles which could affect the suction, so that the base part is easily accessible from this side.

However, the filter medium used in this filter device comprises polyprolene fibres having electret characteristics. Thus, the filter device is only suitable for filtering out particulate substances, like e.g. pollen or dust. There is no suggestion that active carbon might be used in such a filter element. Furthermore, this earlier application contains no indication that the filter element and holding frame may have standered dimensions, whereas the holding means may have its shape and dimensions adapted to the vehicle to which it is attached.

Further in another earlier patent publication EP-A-0 380 026 a filter system is already proposed having a housing which is placed on the suction opening of the heating and ventilation system of a vehicle and which is provided with a channel running in peripheral direction. A flexible filter cassette is pushed into this channel from a side of the housing (and therefore transversely of the suction direction of the ventilation system). The filter cassette comprises a thin flexible plastic in which is arranged a thin filter cloth and which is provided on one side with a hand-grip.

This known filter system has the drawback that due to its flexible character the filling thereof in the housing on the suction opening is not simple. The permissible thickness of the filter material is moreover limited by the fact that the filter part must be flexible and must fit into a narrow channel. An active carbon filter for instance cannot therefore be applied. Finally, exchanging of the known filter cassette also requires a laborious and time-consuming operation as the cassette must be inserted through an opening in the side of the housing, while this side will be difficult of access in many types of automobile.

The present invention therefore has for its object to provide a filter device of the type described in claim 1, wherein these drawbacks do not occur. This is achieved according to the invention in that the filter part comprises a filter element placed between a pre-filter and an after-filter and filled with active carbon. Thus, harmful substances specifically gases may be removed. Furthermore, the functions of a dust filter and an active carbon filter are then combined herein. The pre-filter and after-filter can each have the form of a paper filter, plastic filter or a so-called "charged particle" filter.

A universally applicable standard filter part can furthermore be used in such a filter device which is interchangeable between a large number of different vehicle types, whereby costs are reduced considerably. Only the base part then has to be adapted to the shape and dimensions of the heating and ventilation system of the relevant vehicle type. A large number of different filter types can thus also be made available in economically responsible manner, whereby a user can arrange a suitable filter for any environment. The thickness of each filter type can be adapted simply to the nature of the filter material.

In preference the filter part is fixed removably in the receiving space, for instance by a clamp connection. The filter part can thus be replaced, optionally by the user himself, quickly, simply and without use of costly tools.

The pre-filter can be a dust filter element for filtering out solid particles, for instance in the form of a paper filter, plastic filter or a "charged particle" filter, i.e. a filter of relatively large mesh width and therefore relatively small resistance, which derives its effect from the attraction of particles for filtering by an electrostatic charge in its fibres.

The pre-filter and after-filter may be intergrated into a jacket enclosing the active carbon.

In order to make the filter easy to handle, the filter part can comprise a housing open on either side for receiving the filter element, which housing can, like the base part, be manufactured from plastic. The plastic can be reusable, whereby the environmental impact remains limited, also when the filter part is changed regularly.

When the base part comprises two base elements connected removably to one another, between which the receiving space is defined, wherein each of the base elements is provided with a connecting piece for connection to a duct of a heating and ventilation system of the vehicle, the filter device can be included in the duct network of the heating and ventilation system instead of in front of the suction opening thereof. This can be important when the space between the suction opening and the motor hood is limited.

The invention further relates to a motor vehicle provided with a filter device as described above. In a preferred embodiment of this motor vehicle according to the invention the form and dimensions of the receiving space and the filter part are dependent on the vehicle.

The invention is now elucidated in the light of a number of embodiments, wherein reference is made to the annexed drawing in which like components are designated with like reference numerals, and in which:
fig. 1 shows a partly broken away perspective view of a detail of a motor vehicle equipped with a filter device according to the invention;
fig. 2 is a partly cut away perspective view with exploded parts of the filter device shown in fig. 1;
fig. 3 shows a section through the filter device shown in fig. 2;
fig. 4 shows an alternative embodiment of the filter device according to the invention with a base part adapted to another vehicle type;
fig. 5 is a perspective view of a filter device with an alternative embodiment of the filter part;
fig. 6 and 7 show two embodiments of a filter element for use in the filter device of fig. 5;
fig. 8 is an exploded perspective view of a third embodiment of the filter device; and
fig. 9 is a partly cut away perspective view of a vehicle interior with a fourth embodiment of the filter device.

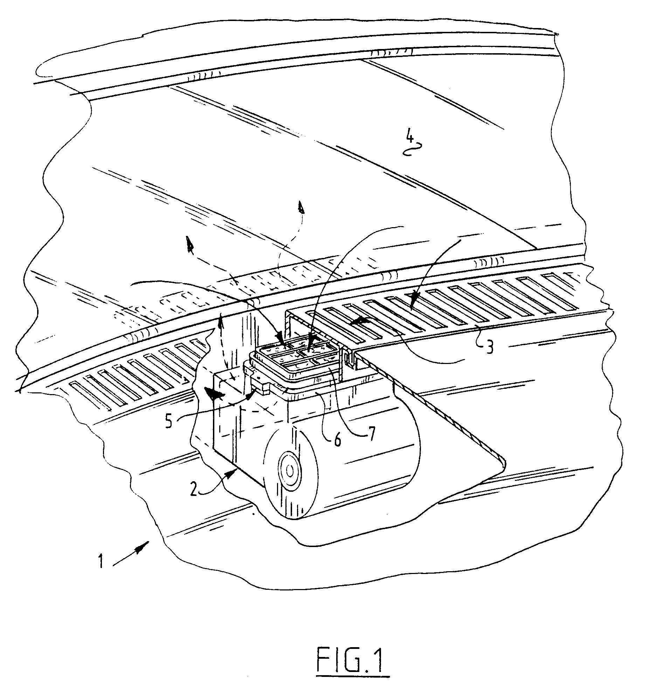

A motor vehicle 1 (fig. 1) is provided with a heating and ventilation system 2 which draws in ambient air through a grid 3 arranged on the front part of motor vehicle 1 and blows out this air, optionally after treatment thereof, into the interior 4 of motor vehicle 1. In order to keep the particulate and/or gaseous substances present in the air out of the interior 4 the heating and ventilation system 2 is provided with a filter device 5 which consists of a base part 6 fixed into vehicle 6 and a replaceable universal filter part 7 arranged thereon.

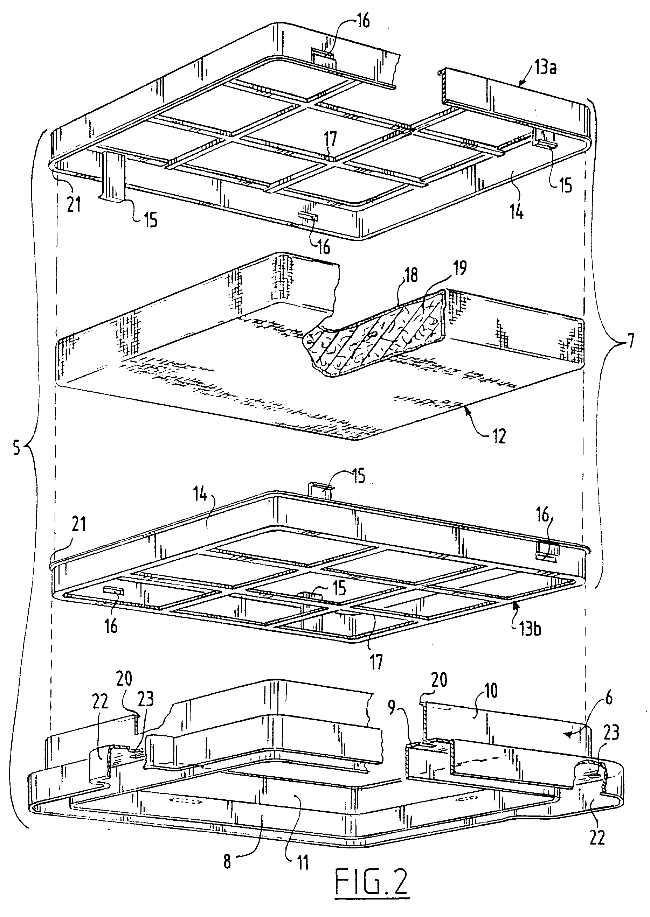

The base part 6, the form and dimensions of which are adapted to those of the suction opening of heating and ventilation system 2 of the motor vehicle 1 in which the filter device 5 is placed, has an opening 8 whereof the dimensions practically correspond with those of filter part 7 (fig. 2). The opening 8 is enclosed by a positioning edge 9 and a standing edge 10 which together define a receiving space 11 for filter part 7.

Filter part 7 comprises a filter element 12 which is received in a housing consisting of two (in this case identical) halves 13a, 13b. Each half-housing 13a, 13b has a peripheral edge 14 with male and female snap connecting means 15, 16 respectively and a bottom formed by a very wide-mesh grid 17. The housing 13 formed by snapping together the connecting elements 15, 16 is therefore substantially open on both sides.

Filter element 12 is formed in the case shown by a jacket 18 in which active carbon 19 is arranged. The front and rear sides of jacket 18 have a density such that they function respectively as pre-filter and after-filter. The pre-filter is herein intended to filter particulate contaminants out of the incoming air in order to prevent the filling 19 becoming clogged, while the after-filter has as its main object to prevent active carbon flakes penetrating into the vehicle interior 4. The jacket 18 can be manufactured from paper, plastic, "charged fibres" or any other filtering material. Instead of the shown pre-filter and after-filter integrated into jacket 18, these could also be arranged separately upstream respectively downstream of filter part 7 in the heating and ventilation system 2.

The filling 19 of active carbon present in jacket 18 adsorbs aromatic hydrocarbons present in the incoming air such as benzene, xylene and toluene. The amount of carbon in filter element 12 can be varied depending on the degree of contamination of the incoming air. In the case of regular driving in urban areas a filter element with for instance more than 400 grams of active carbon can be used, while for a less contaminated environment half this filling weight can have an adequate filtering effect. The amount of carbon must of course be chosen such that the ventilating action of system 2 is retained. Instead of an active carbon filter a simple dust filter, such as a paper filter, plastic filter or "charged fibre" filter can of course also be used, for instance when motor vehicle 1 is used little in urban areas and the largest part of the substances to be excluded will thus of course be of particulate character.

Filter part 7 is fixed removably in the receiving space 11 of base part 6, in the case shown by a snap connection. For this purpose the standing edge 10 of receiving space 11 has a number of protrusions 20 arranged spread over its periphery, while both half-housings 13a, 13b of filter part 7 are provided with a protruding edge 21. However, a connection by means of screws, velcro tape or the like can also be envisaged instead of a snap connection.

Base part 6 further has provisions for fixing to the heating and ventilation system 2 of motor vehicle 1. These provisions are for instance formed by lips 22 protruding on either side of base part 6 and having holes 23 arranged therein for receiving screws (not shown here) for screwing into the heating and ventilation system 2. (Use can of course be made for fixing of base part 6 of other fastening means instead of screws, for instance glue). The form of the lips 22 and the placing of screw holes 23 is adapted to the form and dimensions of the heating system 2 of each specific type of motor vehicle 1. In the embodiment shown the base part 6 is suitable for fixing in a passenger car of the type Audi 80. Conversely, the filter part 7 has standard dimensions so that it can be used in a large number of different types of motor vehicle, whereby costs are considerably limited. In the embodiment shown these standard dimensions amount to (length x breadth) 157.6 ± 2 mm x 122.7 ± 2 mm. The height of filter part 7 is of less importance but amounts in the case shown to roughly 30 mm.

Both housing 13 and base part 6 can be manufactured from a re-usable plastic. Use of a hard plastic results in an easily-handled and form-retaining filter part 7, whereby exchanging thereof is greatly simplified, while the environmental impact is still minimal, since after replacement of filter part 7 the half-housings 13a, 13b can be processed simply into raw material for a new application. Filter element 12 likewise lends itself well to re-use by cutting open jacket 18 after removing filter element 12 from half-housings 13a, 13b and removing the filling 19 of active carbon present therein. The active carbon can then be washed and used again.

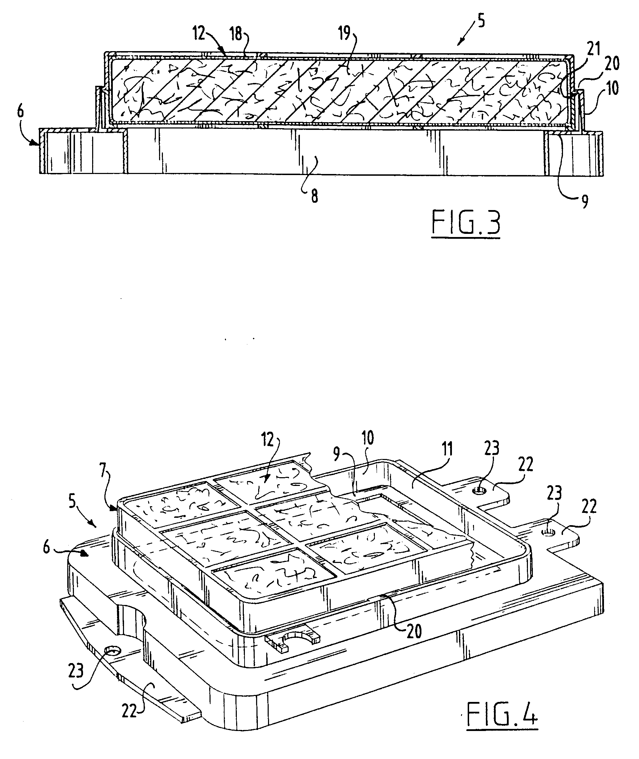

Because filter part 7 is fixed by means of a snap connection to base part 6, the filter device 5 according to the invention can be used in any desired position. In addition to the lying position shown in fig. 3, a standing or even hanging position of filter part 7 is thus also conceivable if the configuration of the heating and ventilation system 2 requires such. It is therefore not important where the suction opening of this system is situated.

Because the dimensions of the receiving space 11 and the filter part 7 are standardized, filter part 7 can be used in combination with any random base part 6 (shown in fig. 4 is a base part suitable for fitting in a passenger car of the type Peugeot 405). Filter device 5 is therefore universally applicable and is also suitable for building into a vehicle 1 by the user himself after delivery.

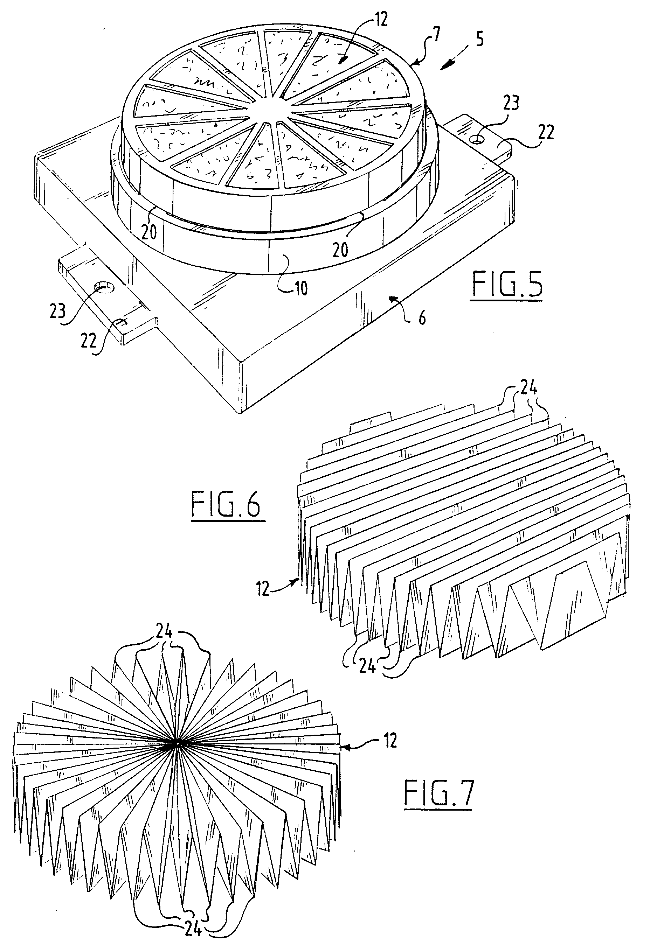

It is not necessary for the filter part 7 to have the shown rectangular shape. A round or otherwise shaped filter part 7 could of course equally well be used (fig. 5), should this function better in view of the form of the suction opening of the heating and ventilation device of a sufficiently large number of vehicle makes and types. It is therefore conceivable for filter parts to be supplied in two or three main types. The base parts must then of course be supplied with corresponding receiving spaces. (The base part 6 shown here is otherwise suitable for yet another type of motor vehicle than the base parts of the foregoing figures).

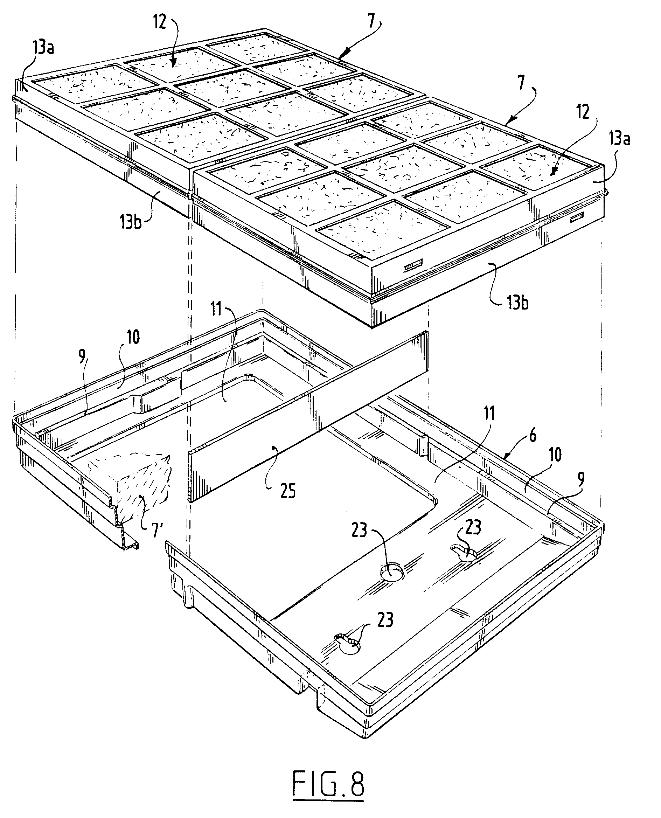

When the filter element 12 is embodied as dust filter, thus for instance as paper filter, plastic filter or "charged particle" filter, it preferably has a wave or concertina shape (fig. 6), whereby the filtering surface area to be received in housing 13 is maximalized. The fold lines 24 of filter element 12 can therein run parallel or radially (fig. 7).

For an improved filtering action without too great an increase in the suction resistance of the ventilation and heating system 2, a base part 6 can be used with a large through-flow surface area in which two or more standard filter parts 7 can then be arranged (fig. 8). The filter parts 7, which in the embodiment shown are placed with their long sides mutually adjacent, can of course also be placed with their short sides mutually adjacent or be arranged in the base part 6 for instance in a T- or L-shape. In the shown embodiment the filter parts 7 are fixed in base part 6 by sliding clamping instead of by a snap clamping connection. In order to increase the clamping force a partition wall 25 is further arranged in base part 6 between both filter parts 7.

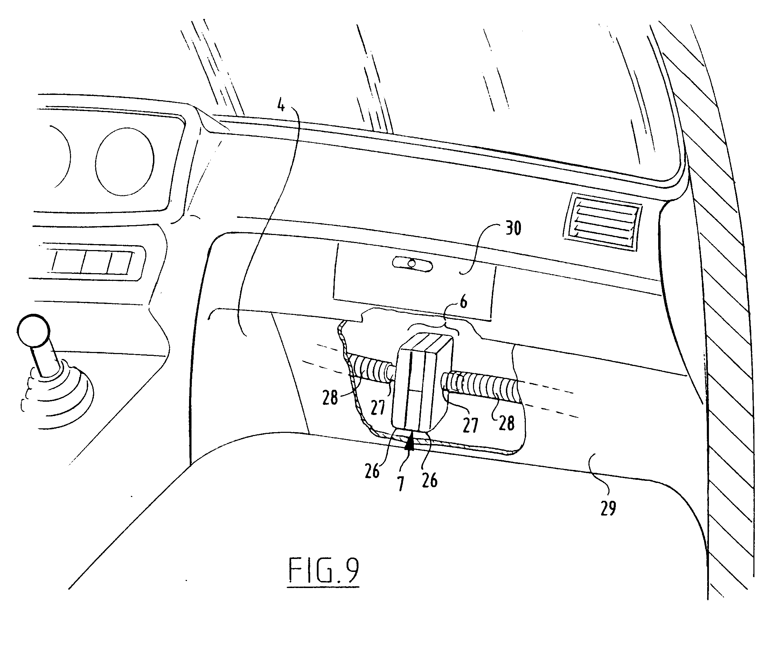

When the space between the suction opening of the heating and ventilation system 2 and the motor hood is not sufficient to arrange a filter device 1 therein, this latter can also be arranged in a duct 28 of the system 2, for example in the interior 4 of the vehicle 1 (fig. 9). To this end the base part 6 can then be formed by two elements 26 for releasable connection to one another, between which filter part 7 is arranged. Each element 26 has a connecting piece 27 which is joined to the duct 28 of the heating and ventilation system. The filter device 1 can for instance be received in a space 29 below the glove compartment 30, which space 29 is available standard in a large number of vehicles for accommodation of a climate control system (air-conditioning) to be built in as optional accessory.

When filter part 7 according to the invention becomes saturated it can be replaced simply by the user without tools being necessary for this purpose. The filter part 7 can then for instance be traded in at a vehicle accessory dealer, whereafter filter part 7 is returned to the manufacturer who can then take apart and clean filter part 7 and make it suitable for re-use.

Although the filter device 1 is described above in relation to motor vehicles, other fields of application can of course be envisaged.

## Claims

1. Filter device (5), in particular for a motor vehicle (1), provided with a base part (6) comprising means (22,23) adapted for fixing to the vehicle (1) and defining at least one receiving space (11), and with at least one exchangeable filter part (7) arranged in the receiving space (11), the filter part (7) being form-retaining and the receiving space (11) being accessible from the inflow side of the base part (6), **characterized in that** the filter part (7) comprises a filter element (12) placed between a pre-filter and an after-filter and filled with active carbon (19).

2. Filter device (5) as claimed in claim 1, **characterized in that** the filter part (7) is fixed removably into the receiving space (11).

3. Filter device (5) as claimed in claim 2, **characterized in that** the filter part (7) is fixed in the receiving space (11) by a clamp connection.

4. Filter device (5) as claimed in any of the foregoing claims, **characterized in that** the pre-filter is a dust filter element.

5. Filter device (5) as claimed in any of the foregoing claims, **characterized in that** the pre-filter and after-filter are integrated into a jacket (18) enclosing the active carbon (19).

6. Filter device (5) as claimed in any of the foregoing claims, **characterized in that** the filter part (7) comprises a housing (13) open on either side and receiving the filter element (12).

7. Filter device (5) as claimed in claim 6, **characterized in that** the housing (13) is manufactured from plastic.

8. Filter device (5) as claimed in any of the foregoing claims, **characterized in that** the base part (6) is manufactured from plastic.

9. Filter device (5) as claimed in claim 7 or 8, **characterized in that** the plastic is re-usable.

10. Filter device (5) as claimed in any of the foregoing claims, **characterized in that** the base part (6) comprises two base elements (26) connected removably to one another, between which the receiving space (11) is defined, wherein each of the base elements (26) is provided with a connecting piece (27) for connection to a duct of a heating and ventilation system (2) of the vehicle (1).

11. Motor vehicle (1) provided with a filter device (5) as claimed in any of the claims 1-10.

12. Motor vehicle (1) as claimed in claim 11, **characterized in that** the form and dimensions of the base part (6) are adapted to the vehicle (1) and the form and dimensions of the receiving space (11) and the filter part (7) are independent of the vehicle (1).

## Patentansprüche

1. Filtervorrichtung (5) insbesondere für ein Motorfahrzeug (1), mit einem Basisteil (6) mit Mitteln (22, 23) zur Befestigung am Fahrzeug (1) und zur Umgrenzung mindestens einer Aufnahmekammer (11), sowie mit mindestens einem auswechselbaren Filterteil (7), das in der Aufnahmekammer (11) angeordnet ist, wobei das Filterteil (7) formhaltend ist und die Aufnahmekammer (11) von der Anströmseite des Basisteils (6) her zugänglich ist, dadurch **gekennzeicnet**, daß das Filterteil (7) ein Filterelement (12) aufweist, das zwischen einem Vorfilter und einem Nachfilter angeordnet und mit Aktivkohle (19) gefüllt ist.

2. Filtervorrichtung (5) nach Anspruch 1, dadurch **gekennzeichnet**, daß das Filterteil (7) in der Aufnahmekammer (11) herausnehmbar befestigt ist.

3. Filtervorrichtung (5) nach Anspruch 2, dadurch **gekennzeichnet**, daß das Filterteil (7) in der Aufnahmekammer (11) durch eine Klemmverbindung befestigt ist.

4. Filtervorrichtung (5) nach einem der vorangehenden Ansprüche, dadurch **gekennzeichnet**, daß das Vorfilter ein Staubfilterelement ist.

5. Filtervorrichtung (5) nach einem der vorangehenden Ansprüche, dadurch **gekennzeichnet**, daß das Vorfilter und das Nachfilter zu einer die Aktivkohle (19) umschließenden Hülle (18) integriert sind.

6. Filtervorrichtung (5) nach einem der vorangehenden Ansprüche, dadurch **gekennzeichnet**, daß das Filterteil (7) ein Gehäuse (13) umfaßt, daß auf beiden offen ist und das Filterelement (12) aufnimmt.

7. Filtervorrichtung (5) nach Anspruch 6, dadurch **gekennzeichnet**, daß das Gehäuse (13) aus Kunststoff hergestellt ist.

8. Filtervorrichtung (5) nach einem der vorangehenden Ansprüche, dadurch **gekennzeichnet,** daß der Basisteil (6) aus Kunststoff hergestellt ist.

9. Filtervorrichtung (5) nach Anspruch 7 oder 8, dadurch **gekennzeichnet**, daß der Kunststoff wiederverwendbar ist.

10. Filtervorrichtung (5) nach einem der vorangehenden Ansprüche, dadurch **gekennzeichnet**, daß der Basisteil (6) zwei lösbar miteinander verbundene Basiselemente (26) aufweist, zwischen denen die Aufnahmekammer (11) gebildet ist, wobei jedes Basiselemente (26) mit einem Verbindungsstück (27) für den Anschluß an einen Kanal eines Heiz- oder Lüftungssystems (2) des Fahrzeugs (1) aufweist.

11. Motorfahrzeug (1), das mit einer Filtervorrichtung (5) nach einem der Ansprüche 1 bis 10 versehen ist.

12. Motorfahrzeug (1) nach Anspruch 11, dadurch **gekennzeichnet**, daß die Form und Abmessungen des Basisteils (6) an das Fahrzeug (1) angepaßt und die Form und Abmessungen der Aufnahmekammer (11) und des Filterteils (7) von dem Fahrzeug (1) unabhängig sind.

## Revendications

1. Dispositif de filtration (5), destiné en particulier à un véhicule à moteur (1), muni d'une partie de base (6) comportant des moyens (22, 23) adaptés à une fixation au véhicule (1) et définissant au moins un espace récepteur (11), et ayant au moins une partie de filtration (7), pouvant être échangée, agencée dans l'espace récepteur (11), la partie de filtration (7) conservant sa forme, et l'espace récepteur (11) étant accessible à partir du côté entrée de la partie de base (6), caractérisé en ce que la partie de filtration (7) comporte un élément de filtration (12) positionné entre un pré-filtre et un après-filtre et rempli de charbon actif (19).

2. Dispositif de filtration (5) selon la revendication 1, caractérisé en ce que la partie de filtration (7) est fixée de manière amovible dans l'espace récepteur (11).

3. Dispositif de filtration (5) selon la revendication 2, caractérisé en ce que la partie de filtration (7) est fixée dans l'espace récepteur (11) par une liaison par serrage.

4. Dispositif de filtration (5) selon l'une quelconque des revendications précédentes, caractérisé en ce que le pré-filtre est un élément de filtration de poussière.

5. Dispositif de filtration (5) selon l'une quelconque des revendications précédentes, caractérisé en ce que le pré-filtre et l'après-filtre sont intégrés dans une enveloppe (18) enfermant le charbon actif (19).

6. Dispositif de filtration (5) selon l'une quelconque des revendications précédentes, caractérisé en ce que la partie de filtration (7) comporte un carter (13), ouvert au niveau de chacun de ses côtés, et recevant l'élément de filtration (12).

7. Dispositif de filtration (5) selon la revendication 6, caractérisé en ce que le carter (13) est fabriqué en matière plastique.

8. Dispositif de filtration (5) selon l'une quelconque des revendications précédentes, caractérisé en ce que la partie de base (6) est fabriquée en matière plastique.

9. Dispositif de filtration (5) selon la revendication 7 ou 8, caractérisé en ce que la matière plastique est réutilisable.

10. Dispositif de filtration (5) selon l'une quelconque des revendications précédentes, caractérisé en ce que la partie de base (6) comporte deux éléments de base (26) reliés de manière amovible l'un à l'autre, entre lesquels est défini l'espace récepteur (11), dans lequel chacun des éléments de base (26) est muni d'une partie de raccord (27) destinée à être raccordée à une canalisation d'un système de chauffage et de ventilation (2) du véhicule (1).

11. Véhicule à moteur (1) muni d'un dispositif de filtration (5) selon l'une quelconque des revendications 1 à 10.

12. Véhicule à moteur (1) selon la revendication 11, caractérisé en ce que la forme et les dimensions de la partie de base (6) sont adaptées au véhicule (1) et en ce que la forme et les dimensions de l'espace récepteur (11) et de la partie de filtration (7) sont indépendantes du véhicule (1).
